Europäisches Patentamt

(19) European Patent Office (11) Publication number: **0 003 894**

Office européen des brevets **B1**

(12) **EUROPEAN PATENT SPECIFICATION**

(45) Date of publication of patent specification: **20.01.82** (51) Int. Cl.³: **F 16 H 1/48**

(21) Application number: **79300240.3**

(22) Date of filing: **16.02.79**

(54) **Gear mounting.**

(30) Priority: **16.02.78 GB 609378**
**16.02.78 GB 609478**

(43) Date of publication of application:
**05.09.79 Bulletin 79/18**

(45) Publication of the grant of the European patent:
**20.01.82 Bulletin 82/3**

(84) Designated Contracting States:
**BE CH DE FR GB IT NL SE**

(56) References cited:
**DE - A 2 215 688**
**FR - A - 958 710**
**FR - A - 1 005 218**
**GB - A - 1 007 701**
**GB - A - 1 448 059**

(73) Proprietor: **Hicks Transmissions Limited**
**Dolgerddon Hall**
**Rhayader Powys LD6 5AD (GB)**

(72) Inventor: **Hicks, Raymond John**
**The Rectory Llanwrthwl Llandrindod Wells**
**Powys Wales (GB)**

(74) Representative: **Lainé, Simon James et al,**
**Wynne-Jones, Lainé & James 22, Rodney Road**
**Cheltenham, Glos. GL50 1JJ (GB)**

Courier Press, Leamington Spa, England.

## Gear Mounting

This invention relates to gears. It is primarily concerned with mounting planet pinions in epicyclic gearing, although it can also be applied to other forms of parallel shaft gear trains.

The mounting of pinions in cantilever fashion from the side of a carrier by means of a "flexible pin" is known. Examples are described in earlier British Patents Nos. 1,101,131, 1,456,085, 1,448,059 and 1508999. In all these a central pin is constructed to flex a desired amount under gear-loading in such a manner as to allow the co-axial surrounding sleeve which carries the gear, and which is connected to the pin solely at its outer end with annular clearance over the rest of its length, to remain parallel to the original axis (i.e. parallel to that of the annulus and sun of an epicyclic gear) under gear loading. Thus, the gears mesh evenly along the length of the teeth, and whenever there is any tendency for the planet or other intermediate gear or pinion to tilt under load, a restoring couple is immediately generated and the gear reverts to parallelism with the others.

An earlier proposal for this flexible pin mounting relied on interference fits between the pin and carrier and between the pin and sleeve. When this did not prove entirely satisfactory for some applications, electron beam welding or a construction involving somewhat complicated geometry of carrier, pin and sleeve were proposed. However, although these are quite workable, they are expensive to manufacture, somewhat massive, and the problem of how to balance accurately and so avoid difficulties with centrifugal forces at high speeds was not entirely resolved.

The aim therefore is to provide a gear mounting offering the same load-spreading and adjusting capability, but which is lighter and simpler to produce, and which can readily be designed in a balanced form to overcome the centrifugal problem.

According to the present invention there is provided a gear mounting having a spindle extending substantially normal to a carrier and capable of radial excursions from an initial position when under load, characterised in that the spindle has, in its relaxed state, a co-axial member extending over substantially the full spindle length and which is under axial compression by abutments at both ends, one of which is provided by the carrier, and in that this member and the abutting surfaces are adapted, under radial loading of a gear on the spindle, to allow said excursions by the flexure of said member and/or the relative movement of the abutting surfaces, and to transform the radial loading into a change of axial stress in the spindle which generates resistance to the radial excursion caused by said loading.

In one preferred form, the spindle is cantilevered from said carrier and comprises radially inner and outer members one of which is axially tensioned and co-operates with the other member, which is the axially compressed member, at the end remote from the carrier axially to compress the other member against the carrier. Conveniently, the inner member is a tension bolt, axially compressing a tubular outer member.

In this case, the outer member may be a tube having radial clearance over an intermediate portion only of the bolt and capable of contraflexing while the bolt bends under load over said intermediate portion. There is an advantage in having the annular abutment surfaces of the tube against the outer end of the bolt and the carrier of less area but at a greater radius than the annular cross-section of the intermediate portion of the tube.

These arrangements rely on flexing and bending to an extent dependent on the load. In an alternative arrangement, the tube member effectively engages the carrier at a generally coned surface, normals to which extend substantially through the centroid of the cantilevered assembly. The outer member and carrier may have matched abutting frusto-conical surfaces, and when the outer member is radially displaced, there is mutual sliding.

In another arrangement, the outer member and carrier have abutting surfaces, both generally coned but of different curvatures in axial section, there being similar engagement of the outer member with the end of the bolt remote from the carrier. This provides annular lines of contact at each end, and instead of mutual sliding there will be a rolling action when the load is sufficient to overcome the bolt tension maintaining the annular lines of contact. Up to a transition point, when the outer member is a tube having radial clearance over the bolt and is capable of contraflexing while the bolt bends under load, those lines of contact will be maintained and the members will first distort rather than roll.

With the cantilevered tube and bolt spindle, the spindle will generally have a gear carrier sleeve member with radial clearance over the tube and clear of the carrier at the inner end, being mounted by an inturned flange at its outer end captive between the bolt and the tube.

Similar principles can be applied when the spindle is compressed between the flanges on a straddle carrier. Instead of a central bolt, these flanges will be urged towards each other by bolts or other means remote from the gear spindle.

In one form, the spindle may engage one flange by matched coned abutment surfaces, normals to which extend substantially through the centroid of the spindle, the other end of the spindle having a slidable abutting engagement with the other flange. Radial excursions of the spindle increase the compression.

In an alternative, the spindle comprises inner and outer members with radial clearance therebetween, the outer member having a closed end slidably abutting one flange and an open end clear of the other flange, and the inner member having abutting engagement with said other flange and the interior of said closed end, each such engagement being of two generally coned surfaces but of different curvature in axial section, and normals thereto extending substantially through the centroid of the spindle. Preferably the inner member will be a tube capable of contraflexing under load. This arrangement also provides two modes of operation, with a transition between distortion of the spindle and a rolling action.

For a better understanding of the invention some constructional forms will now be described, by way of example, with reference to the accompanying drawings, in which:—

Figure 1 is an axial section of a planet mounting in an epicyclic gear,

Figure 2 is a diagram illustrating distortions under load of the mounting of Figure 1,

Figure 3 is an axial section of another planet mounting,

Figure 4 is an axial section of a further planet mounting,

Figure 5 is an axial section of a modified planet mounting.

Figure 6 is an axial section of yet another planet mounting,

Figure 7 is an axial section of part of a straddle mounting for a gear spindle, and

Figure 8 is an axial section of part of another straddle mounting for a gear spindle.

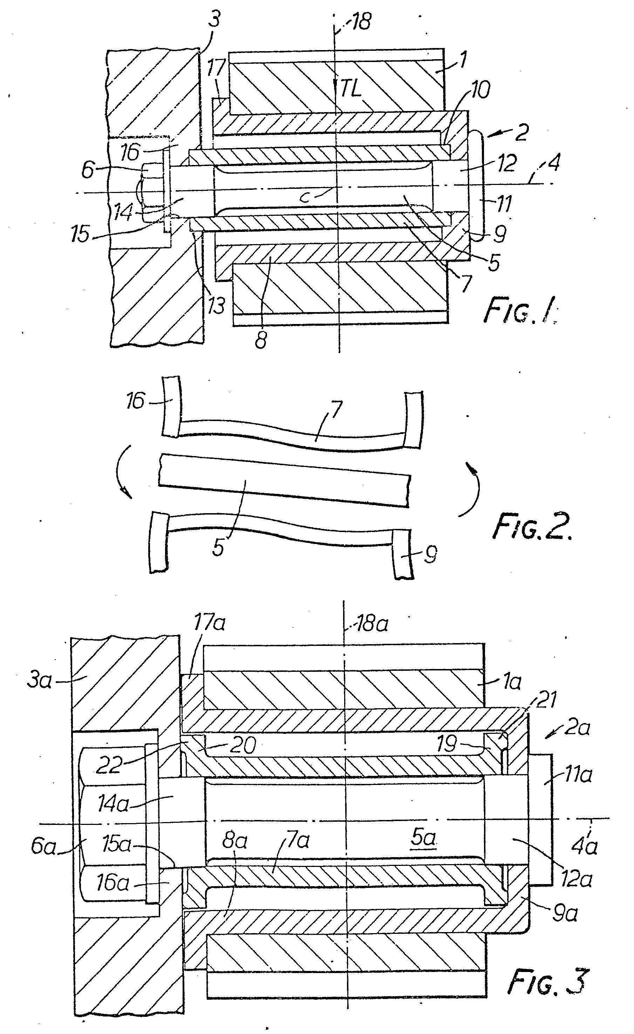

In Figure 1, a planet 1 is co-axially mounted on an assembly 2 projecting laterally from a carrier 3. The common axis of the planet and its mounting assembly, when the latter is in its relaxed state, is indicated at 4.

The assembly comprises a bolt 5 secured by a nut 6 to the carrier 3, a tube 7 and a sleeve 8 on which the planet 1 can rotate. The sleeve 8 has at its outer end remote from the carrier an inwardly projecting annular flange 9, stepped at 10 to fit between the outer end face of the tube 7 and the bolt head 11. Adjacent the bolt head, the shank of the bolt 5 has a thickened portion or spigot 12, and the outer end of the tube 7 is radially located between this and the step 10. At the inner end, the tube is radially located between a step 13 in the carrier and a thickened portion or spigot 14 of the bolt, which extends further to fit a corresponding aperture 15 in the carrier 3. The nut 6 is threaded on beyond this. The carrier is recessed at this area to form a diaphragm 16 giving added flexibility, matching that of the outer end of the assembly.

The sleeve 8 does not abut against the carrier and is supported entirely by its flange 9 which is clamped between the tube 7 and the bolt 5. At its inner end it has a balancing flange 17. The centre of mass C of this cantilever assembly coincides with the axis 4 and the transverse plane 18 through the centre of the planet 1, in which plane will be the resultant TL of the radial and tangential forces on the gear.

The action of the bolt is to pre-compress and clamp the tube 7 co-axially between the flange 9 and diaphragm 16. The bolt will be tensioned. When the planet is loaded, there may occur a distortion illustrated in very much exaggerated fashion in Figure 2. The tube 7 will flex in reverse directions with a central point of contraflexure, as in previous proposals was achieved by a solid pin. However, because of the pre-compression on the end faces of tube 7 the change of pressure due to the super-posed bending is insufficient to reduce the compression to zero on what would normally be the tensile side of the tube. Thus there is no surface separation and no danger of fretting. The bolt 5 will simply incline or bend very slightly in one direction, and it may also be minutely stretched. There will be generated restoring couples as indicated by arrows, and the sleeve 8 will have freedom to maintain parallelism with the original axis 4.

Instead of true co-axiality, the bolt may be slightly inclined in the direction such that, under load, it will tend to be "straightened" into the co-axial position. This will considerably increase the load that can be sustained for a given stress.

A modified mounting is shown in Figure 3, where parts corresponding to those of Figure 3 bear the same references but with the suffix a.

The difference lies in the compression tube 7a which is no longer a plain tube but has outwardly projecting flanges 19, 20 at its ends with annular abutment ribs 21, 22 around the outer peripheries of the flanges. The tube ends are a close fit over spigots 12a, 14a and the shear load at the outer end of the mounting is transmitted from the flange 19a through spigot 12a to the tube. The ribs 21, 22 project axially beyond the ends of the main body of the tube to engage the flange 9a and the diphragm 16a respectively, neither of which are now stepped. The contact areas of the ribs 21, 22 can be less than those of the end faces of the tube 7 of Figure 1, but those ribs are at a greater radius than the main body of the tube. This means that the second moment on the tube is larger, and that the overall sum of the pre-compression stress and the compressive component of the applied bending stress can be reduced. The reduced load on the bolt 5a enables that to be of lesser diameter and bending stiffness than previously. The flanges 19, 20 also introduce more diaphragms into the assembly, so further enhancing its flexibility.

In these arrangements, the abutting engagement of the inner and outer members is separated into radial interfaces, through which the axial loading acts, and cylindrical interfaces, by which shear loads are transmitted. This can be simplified by providing a "resultant" inclined interface which gives rise to a different mode of operation, as the following will show.

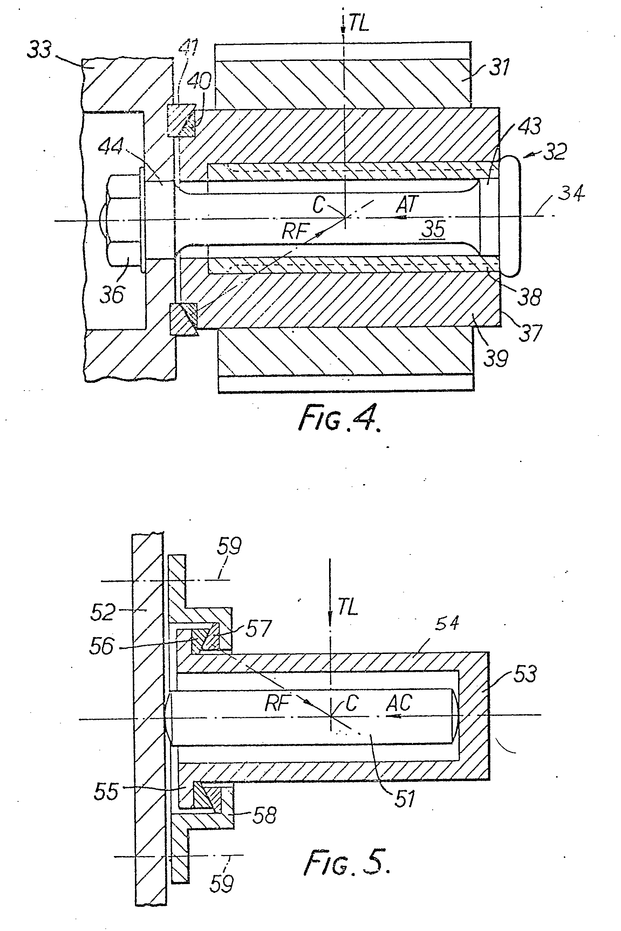

In Figure 4, a planet 31 is co-axially mounted on an assembly 32 projecting laterally from a carrier 33; the common axis of the planet and its mounting assembly, with the latter in its relaxed state, is indicated at 34.

The assembly comprises a steel bolt 35 secured by a nut 36 to the carrier 33 and a sleeve member or spindle 37 on which the planet can rotate. The sleeve member which may be of lighter metal, is of composite construction with an inner tube 38 on which an outer sleeve 39 fits, and at the inner end, adjacent the carrier, the sleeve has a bevelled or frusto-conical surface provided by a hardened annular insert 40. This bears against a matching frusto-conical surface provided by an insert 41 in the carrier 33. At the outer end the tube 38 locates axially against the bolt head and radially on a thickened portion or spigot 43 where the bolt shank meets the head. The bolt is similarly shaped and dimensioned at the inner, carrier end so that it has a thickened portion or spigot 44 where it enters through the carrier, beyond which there is a screw thread to receive the nut 36.

When assembled the nut tensions the bolt and compresses the sleeve member against the frusto-conical surface of insert 41. In effect, the bolt 35 and tube 38 form a spring, and the frusto-conical surfaces act as locating and self-righting means for the sleeve assembly and planet. Added flexibility could be provided by reducing the thickness of tube 38, as shown by broken lines, so that it radially locates sleeve 39 at the inner, carrier end. A more rigid assembly could have the tube 38 and sleeve 39 integral.

Under the influence of a uniform tooth load whose centre coincides with that of the cantilever, the outer sleeve moves in a direction tangential to the frusto-conical surface such that there is a lateral component of deflection parallel to the face of the planet carrier and an axial component of deflection normal to the face of the carrier, the latter movement creating further tension in bolt 35. The resultant RF of the reaction forces (after due allowance for friction) at the frusto-conical surfaces extends through the centre of mass C of the cantilever assembly which is also in the transverse plane bisecting the planet's teeth length and containing the line of action TL of the gear tooth load. The spindle 37 is therefore subject to three loads: the planet tooth bearing load, the normal reaction load on the frust-conical surface and the axial tension AT in bolt 35, and since the lines of action of all three forces coincide at one point C, the spindle is an equilibrium. Any tendency for the spindle to tip at one end with respect to the other will immediately transfer the tooth bearing load to the other end in such a manner that a restoring couple will be exerted until the forces once more reach a state of equilibrium. The angular attitude of the pinion is therefore dictated by the teeth of the mating gear rather than by the spindle which is not angularly rigid.

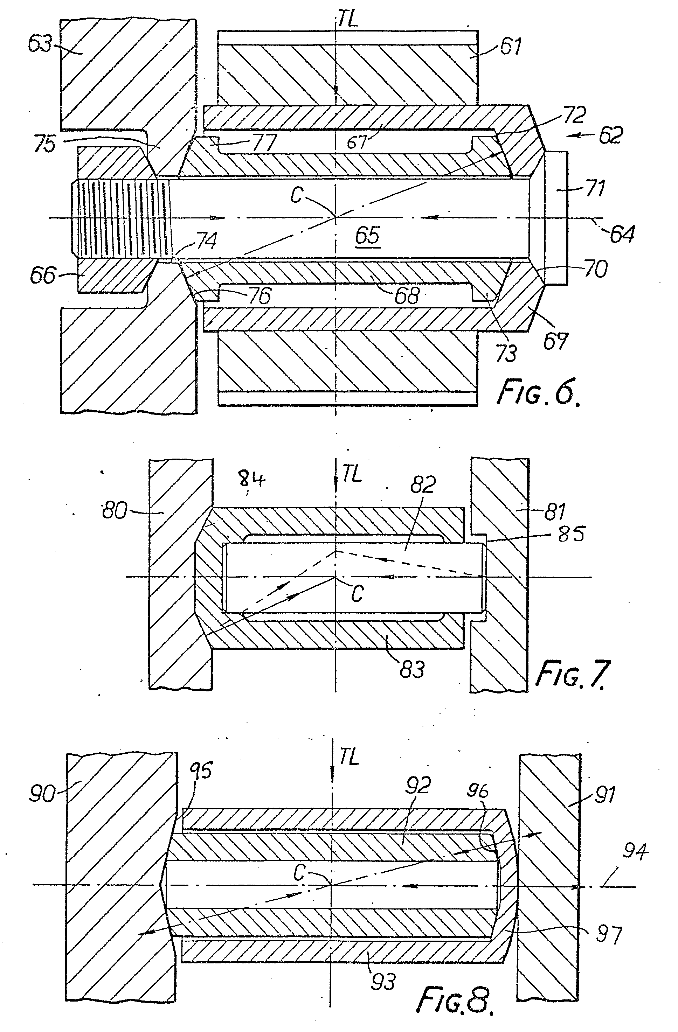

In Figure 5, the arrangement is reversed in that the inner member is under axial compression AC and the outer one in tension. The inner member is a plain pin 51 with domed ends centred on centroid C and abutting respectively against the carrier 52 and the closed outer end 53 of gear carrying sleeve or spindle 54. At its end adjacent the carrier, the sleeve has an outwardly projecting annular flange 55 against which a hardened ring 56 locates. This has a frusto-conical surface with which a matching surface on another ring 57 co-operates, the surfaces being angled so that a normal to them passes through or very near the centre of mass C of the cantilevered assembly. The ring 56 is confined by an annulus 58 secured to the carrier by bolts 59, and these can be tensioned to draw the surfaces of rings 56 and 57 together in hook-like fashion and thereby tension the sleeve 54 and compress the pin 51.

The fundamental advantage of both these arrangements is that because the spring elements are subject to uniform tension or compression across their sections and uniform loads along their lengths, the volume of stressed material required for a given strain energy is considerably less than for flexible pins subject to non-uniform bending along their length. Conversely the level of stress for a given volume of spring is considerably lower.

In Figures 4 and 5, displacement of the gear parallel to its original attitude necessarily involves partial separation of the frusto-conical surfaces, although it may not be possible to ensure the desired mutual sliding of those surfaces. In Figures 1 and 3, such displacement does not cause surface separation, assuming the bolt is sufficiently tensioned, but relies more on flexure. The two approaches can be combined in an arrangement such as that shown in Figure 6.

In Figure 6, a planet 61 is again co-axially mounted on an assembly 62 projecting laterally from a carrier 63, the common axis being shown at 64. The assembly comprises a bolt 65 retained by coned nut 66 to the carrier, a sleeve member 67 on which the planet can rotate, and a compression tube 68 loosely sleeved over the bolt and allowing radial excursions of the member 67. The member 67 has an inturned flange 69 at its outer end with one frusto-conical surface 70 that abuts the coned under side of the bolt head 71 and another frusto-conical surface 72 which faces generally back towards the carrier. A spherically-domed, thickened rim 73 at the outer end of the tube 68 abuts this surface 72 with, in the relaxed state at least, a circle of contact. There is a similar configuration at the carrier end, the hole 74 in the diaphragm portion 75 through which the bolt extends being countersunk at both faces to present a mating frusto-conical surface to the nut and a frusto-conical surface 76 against which spherically domed rim 77 at the inner end of the tube 68 abuts.

This assembly has two modes of deflection, the transition point between them depending on the pre-tension applied to the bolt 65.

In the first mode there is no separation between the ends of the compression tube and the conical seating 72 and 76. When there is any deflection, this will be due almost entirely to the combined bending and shear in the tube 68, with some local deflection in the respective seatings. There will be little change in mean axial lengths, and therefore little change in the tube. This mode may be likened to the operation of the Figures 1 and 3 assemblies.

The second mode occurs when the effective bending moment applied to the end of the tube 68 reaches the level at which the effective applied tensile stress exceeds the mean pre-compression load. This results in diagonally opposite surfaces of the tube lifting from the seatings 72 and 76 in the plane of the load, while the tube rolls by means of its spherical ends at points on the opposite diagonal in that plane. In this mode not only do the combined bending and shear loads in the tube increase, but also the lengths of the tube and tie bolt change, thus increasing their respective compressive and tensile loads. This mode to some extent resembles the operation of the Figures 4 and 5 assemblies, but with rolling substituted for sliding.

The configuration of the abutting surfaces could differ. For example, instead of part-spherical tube ends they could be frusto-conical, and engage domed surfaces replacing the frusto-conical surfaces 72. The two abutting surfaces could both be curved, in axial section, with different radii of curvature. But whatever configuration is employed it is desirable that the normal reaction should extend through the centre C in the plane of tooth load TL.

This principle of a self-locating and balancing spindle can also be applied to a straddle mounting, in which the spindle, instead of being cantilevered, spans two flanges 80 and 81 of a mounting as shown in Figure 7. The spindle comprises member 82 which is an intimate fit in a sleeve member 83. This member 83 is closed at one end and locates in a depression 84 in the flange 80, with mating frusto-conical surfaces similar to those described before. At the other end the core 82 projects to abut the base of a depression 85 in the flange 81, the abutment plane being radial of the spindle axis and there being freedom for the spindle to move radially from its initial central position.

Initially the spindle is again subject to three loads, coincident at centroid C, namely the radial tooth load and reaction loads from depressions 84 and 85, as shown by full arrowed lines, the flanges being urged together by means (not shown) remote from the gear spindle. On movement of the spindle under the influence of tooth loading the effect of friction will modify the reaction forces as indicated by the broken arrowed lines. The distance of the centroid C from the respective sliding surfaces will be chosen so that the modified reaction loads due to friction will also be coincident on the resultant line of tooth loading TL, thus maintaining the balance of the spindle.

In Figure 8, another straddle mounting has flanges 90, 91 spanned by a two-part spindle comprising flexible tubular core 92 and outer sleeve 93, which is closed at one end, normally co-axial on line 94. The flange 90 has a conical depression 95 in which one spherically domed end of the core 92 locates, the other similarly shaped end abutting a frusto-conical interior surface 96 of the generally domed closed end 97 of the sleeve 93. The outer surface of the end 97 is spherical and abuts the flange 91, while the main portion of the sleeve 93 extends with radial clearance over the core 92 to terminate short of the flange 90. The applied load axially compresses the core 92, and the reaction forces at surfaces 95 and 96 pass through centroid C.

This is equivalent to the Figure 6 cantilever assembly, the central bolt now being removed and the axial compression being generated elsewhere. In Figure 6 the bolt head could move radially; the equivalent movement in Figure 8 is provided by the domed end 96 sliding laterally over the flange 91. The associated frictional load is beneficial for damping.

As with Figure 6, the abutting surfaces could be differently shaped, and there is a transition between flexing of the inner tube and a rolling action and surface separation at its ends.

It will be noted that in all these constructions no interference fits are required, nor any welding. The elements are themselves of simple form and can be small, light-weight and readily assembled. Axial symmetry is easily achieved, and this largely resolves the problem of centrifugal forces.

## Claims

1. A gear mounting having a spindle (2; 2a; 32; 51, 53; 62; 82, 83; 92, 93;) extending substantially normal to a carrier (3; 3a; 33; 52; 63; 80, 81; 90, 91) and capable of radial excursions from an initial position when under load, characterised in that the spindle has, in its relaxed state, a co-axial member (7; 7a; 38; 51; 68; 82; 92) extending over substantially the full spindle length and which is under axial compression by abutments at both ends, one of which is provided by the carrier, and in that this member and the abutting surfaces (10, 13; 9a; 16a; 40, 41; 56, 57; 72, 76; 84; 95) are adapted, under radial loading of a gear on the spindle, to allow said excursions by the flexure of said member and/or the relative movement of the abutting surfaces, and to transform the radial loading into a change of axial stress in the spindle which generates resistance to the radial excursion caused by said loading.

2. A gear mounting as claimed in Claim 1, wherein the spindle is cantilevered from said carrier and comprises radially inner and outer members (5, 7; 5a, 7a; 35, 38; 51, 54; 65, 68) one of which is axially tensioned and co-operates with the other member, which is the axially compressed member, at the end remote from the carrier axially to compress the other member against the carrier.

3. A gear mounting as claimed in Claim 2, wherein the inner member is a tension bolt (5, 5a; 35; 65).

4. A gear mounting as claimed in Claim 3, wherein the outer member is a tube (7; 7a) having radial clearance over an intermediate portion of the bolt (5; 5a) and is capable of contraflexing while the bolt bends under load over said intermediate portion.

5. A gear mounting as claimed in claim 4, wherein the annular axial abutment surfaces (21, 22) of the tube (7a) against the outer end of the bolt (5a) and the carrier (3a) are of less area but at a greater radius than the annular cross-section of the intermediate portion of the tube.

6. A gear mounting as claimed in claim 2 or 3, wherein the outer member (38; 54; 68) engages the carrier at a generally coned surface (41; 56; 76), normals to which extend substantially through the centroid (C) of the cantilevered assembly.

7. A gear mounting as claimed in claim 6, wherein the outer member (38; 54) and carrier (33; 52) have matched abutting frusto-conical surfaces.

8. A gear mounting as claimed in claim 6 as appendant to claim 3, wherein the outer member (68) and carrier (63) have abutting surfaces (76, 77), both generally coned but of different curvatures in axial section, and wherein there is similar engagement (72, 73) of the outer member with the end of the bolt remote from the carrier.

9. A gear mounting as claimed in claim 8, wherein the outer member (68) is a tube having a radial clearance over the bolt (65) and is capable of contraflexing while the bolt bends under load.

10. A gear mounting as claimed in claim 4, 5, 8 or 9, wherein the spindle (2; 2a; 62) has a gear carrying sleeve member (8; 8a; 67) with radial clearance over the tube (7; 7a; 68) and clear of the carrier (3; 3a; 63) at the inner end, being mounted by an inturned flange (9; 9a; 69) at its outer end captive between the bolt (5; 5a; 65) and the tube.

11. A gear mounting as claimed in claim 1, wherein the spindle is compressed between the flanges (80, 81; 90, 91) of a straddle carrier.

12. A gear mounting as claimed in claim 11, wherein the spindle engages one flange (80) by matched, coned abutment surfaces (84 normals to which extend substantially through the centroid (C) of the spindle, the other end of the spindle having a slidable abutting engagement (85) with the other flange (81).

13. A gear mounting as claimed in claim 11, wherein the spindle comprises inner and outer members (92, 93) with radial clearance therebetween, the outer member (93) having a closed end (97) slidably abutting one flange (91) and an open end clear of the other flange (90), and the inner member (92) having abutting engagement with said other flange (90) and the interior of said closed end (97), each such engagement being of two generally coned surfaces (95, 96) but of different curvature in axial section, normals thereto extending substantially through the centroid of the spindle.

14. A gear mounting as claimed in claim 13, wherein the inner member (92) is a tube capable of centraflexing under load.

15. An epicyclic gear, wherein the planets are carried on gear mountings as claimed in any preceding claim.


## Revendications

1. Monture pour engrenages comportant un mandrin (2; 2a; 32; 51, 53; 62; 82, 83; 92, 93) s'étendant practiquement perpendiculairement à un support (3; 3a; 33; 52; 63; 80, 81; 90, 91) et pouvant effectuer des mouvements dans le sens radial à partir d'une position initiale lorsqu'il est soumis à une charge, caractérisée en ce que le mandrin comporte, à l'état relaxé, un organe coaxial (7; 7a; 38; 51; 68; 82; 92) s'étendant pratiquement sur toute la longueur du mandrin et qui est soumis à une compression axiale par dex butées prévues aux deux extrémités et dont une est constituée du support, cet organe et les surfaces de butée (10, 13; 9a, 16a; 40, 41; 56, 57; 72, 76; 84; 95) étant conçus, lors de l'application d'une charge radiale à un engrenage monté sur le mandrin, pour permettre les mouvements précités de ce dernier par la flexion de cet organe et/ou le mouvement des surfaces de butée l'une par rapport à lautre, ainsi que pour transformer la charge radiale en un changement de la contrainte axiale exercée dans le mandrin et qui engendre une résistance au mouvement radial provoqué par cette charge.

2. Montoure pour engrenages suivant la revendication 1, caractérisée en ce que le mandrin est monté en porte à faux sur le support et comporte des organes radiaux intérieur et extérieur (5, 7; 5a, 7a; 35, 38; 51, 54; 65, 68) dont un est soumis à une tension axiale et coopére aves l'autre organe, lequel est soumis à une compression axiale, à l'extrémité éloignée du support afin de presser axialement cet autre organe contre le support.

3. Monture pour engrenages suivant la revendication 2, caractérisée en ce que l'organe intérieur est un boulon de tension (5, 5a; 35; 65).

4. Monture pour engrenages suivant la revendication 3, caractérisée en ce que l'organe extérieur est un tube (7; 7a) comportant un espace libre radial au-dessus d'une partie intermédiaire du boulon (5; 5a) et pouvant subir une flexion inverse tandis que le boulon fléchit sous le charge appliquée sur la partie intermédiaire précitée.

5. Monture pour engrenages suivant la revendication 4, caractérisée en ce que les surfaces de butée annulaires axiales (21, 22) du tube (7a) adaptées contre l'extrémité extérieure du boulon (5a) et le support (3a) ont une plus petite surface, mais un plus grand rayon que la section transversale annulaire de la partie intermédiaire du tube.

6. Monture pour engrenages suivant l'une quelconque des revendications 2 et 3, caractérisée en ce que l'organe extérieur (38; 54; 68) vient s'engager sur le support à une surface généralement conique (41; 56; 76) perpendiculairement à laquelle il s'étend pratiquement à travers le centre de masse (C) de l'assemblage en port à faux.

7. Monture pour engrenages suivant la revendication 6, caractérisée en ce que l'organe extérieur (38; 54) et le support (33; 52) comportent des surfaces d'aboutement tronconiques correspondantes.

8. Monture pour engrenages suivant la revendication 6, caractérisée en ce que l'organe extérieur (68) et le support (63) comportent des surfaces d'aboutement (76, 77) qui sont toutes deux généralement coniques, mais présentent des courbures différentes en coupe axiale, tandis qu'un engagement semblable (72, 73) est prévu entre l'organe extérieur et l'extrémité du boulon qui est éloignée du support.

9. Montour pour engrenages suivant la revendication 8, caractérisée en ce que l'organe extérieur (68) est un tube comportant un espace libre radial au-dessus du boulon (65) et pouvant subir une flexion inverse tandis que le boulon fléchit sous une charge.

10. Monture pour engrenages suivant l'une quelconque des revendications 4, 5, 8 et 9, caractérisée en ce que le mandrin (2; 2a; 62) comporte un manchon (8; 8a; 67) supportant les engrenages et présentant un espace libre radial au-dessus du tube (7; 7a; 68), ce manchon étant écarté du support (3; 3a; 63) à l'extrémité intérieure, tandis qu'il est monté à l'intervention d'un rebord replié vers l'intérieur (9; 9a; 69) formé à son extrémité extérieure et retenu entre le boulon (5; 5a; 65) et le tube.

11. Monture pour engrenages suivant la revendication 1, caractérisée en ce que le mandrin est comprimé entre les ailes (80, 81; 90, 91) d'un cavalier support.

12. Monture pour engrenages suivant la revendication 11, caractérisée en ce que le mandrin vient s'engager sur une aile (80) par des surfaces d'aboutement coniques correspondantes (84) perpendiculairement auxquelles il s'étend pratiquement par son centre de masse (C), l'autre extrémité du mandrin comportant un élément d'aboutement coulissant (85) venant s'engager sur l'autre aile (81).

13. Monture pour engrenages suivant la revendication 11, caractérisée en ce que le mandrin comprend des organes intérieur et extérieur (92, 93) avec un espace libre radial entre eux, l'organe extérieur (93) comportant une extrémité fermée (97) venant heurter par glissement une aile (91), de même qu'une extrémité ouverte écartée de l'autre aile (90), l'organe intérieur (92) venant heurter cette autre aile (90) et l'intérieur de l'extrémité fermée (97), chacun de ces engagements s'effectuant part deux surfaces généralement coniques (95, 96), mais de courbure différente en coupe axiale, surfaces perpendiculairement auxquelles le mandrin s'étend pratiquement par son centre de masse.

14. Monture pour engrenages suivant la revendication 13, caractérisée en ce que l'organe intérieur (92) est un tube pouvant subir une flexion inverse sous l'application d'une charge.

15. Engrenage épicyclique, caractérisé en ce que des engrenages planétaires sont supportés sur des montures suivant l'une quelconque des revendications précédentes.

**Patentansprüche**

1. Zahnrad-Legerung mit einer Achse (2; 2a; 32; 51; 53; 62; 82, 83; 92, 93) die sich im wesentlichen senkrecht zu einem Träger (3, 3a; 33; 52; 63; 80, 81; 90, 91) erstreckt und bei Belastung von einer Ausgangsstellung radial die Achse ein im unbelasteten Zustand koaxiales Glied (7; 7a; 38; 51; 68; 82; 92) aufweist, das sich im wesentlichen über die ganze Länge de Achse erstreckt und durch Anlagen an beiden Enden unter axialem Druck steht, von denen einer von dem Träger gebildet ist, und daß dieses Glied und die Anlageflächen (10. 13, 9a, 16a; 40, 41; 56, 57; 72, 76; 84; 95) so ausgebildet sind, daß sie unter radialer Belastung eines von der Achse getragenen Zahnrades die genannten Ausschläge durch Biegung des Gliedes und/oder durch die Relativbewegung der Anlageflächen zulassen und die radiale Belastung in eine Anderung der axialen Beanspruchung der Achse umwandelt, die einen Widerstand gegen den durch die Belastung verursachte radialen Ausschlag erzeugt.

2. Zahnrad-Lagerung nach Anspruch 1, dadurch gekennzeichnet, daß die Achse einseitig am Träger gelagert ist und radial innere und äußere Teile (5, 7; 5a, 7a; 35, 38; 51, 54; 65, 68) aufweist, von denen eines axial gespannt ist und mit dem andern Teil, welches das axial zusammengedrückte Teil ist, an dem von dem Träger abgewandten Ende axial zusammenwirkt, um das andere Teil gegen den Träger zu drücken.

3. Zahnrad-Lagerung nach Anspruch 2, dadurch gekennzeichnet, daß das innere Teil ein Spannbolzen (5, 5a; 35; 65) ist.

4. Zahnrad-Lagerung nach Anspruch 3, dadurch gekenzeichnet, daß das äußere Teil ein Rohr (7; 7a) ist, das radiales Spiel gegenüber einem Mittelabschnitt des Spannbolzens (5; 5a) hat und in der Lage ist, sich im Gegensinn zu biegen, wenn sich der Spannbolzen unter Last in dem Mittelabschnitt biegt.

5. Zahnrad-Lagerung nach Anspruch 4, dadurch gekennzeichnet, daß die ringförmigen axialen Anlageflächen (21, 22) des Rohres (7a) an dem äußeren Ende des Bolzens (5a) und am Träger (3a) kleiner sind als die ringförmige Querschnittsfläche des Mittelabschnittes des Rohres, jedoch auf einem größeren Radius liegen.

6. Zahnrad-Lagerung nach Anspruch 2 oder 3, dadurch gekennzeichnet, daß das äußere Teil (38; 54; 68) an dem Träger entlang einer im allgemeinen kegelförmigen Fläche (41; 56; 76) anliegt und die Senkrechten auf diese Fläche im wesentlichen durch den Massenschwerpunkt (C) der einseitig gelagerten Einheit verlaufen.

7. Zahnrad-Lagerung nach Anspruch 6, dadurch gekennzeichnet, daß das äußere Teil (38; 54) und der Träger (33, 52) zusammenpassende, aneinanderliegende kegelstumpfförmige Flächen aufweisen.

8. Zahnrad-Lagerung nach Anspruch 6, soweit er von Anspruch 3 abhängig ist, dadurch gekennzeichnet, daß das äußere Teil (68) und der Träger (63) aneinanderliegende Flächen (76, 77) aufwiesen, die biede im allgemeinen kegelförmig sind, jedoch im Axialschnitt unterschieldliche Krümmungen haben, und daß zwischen dem äußeren Teil und dem von dem Träger abgewandten Ende des Bolzens eine gleiche Anlage vorgesehen ist.

9. Zahnrad-Legerung nach Anspruch 8, dadurch gekennzeichnet, daß das äußere Teil (68) ein Rohr ist, das mit radialem Spiel auf dem Bolzen (65) sitzt und in der Lage ist, sich in Gegensinn zu biegen, wenn sich der Bolzen unter Last biegt.

10. Zahnrad-Lagerung nach Anspruch 4, 5, 8 oder 9, dadurch gekennzeichnet, daß die Achse (2; 2a; 62) eine das Zahnrad tragende Hülse (8; 8a; 67) aufweist, die mit radialem Speil über dem Rohr (7; 7a; 68) sitzt und an ihrem inneren Ende von dem Träger (3; 3a; 63) frei ist und durch einen nach innen umgebogenen Flansch (9; 9a, 69) an ihrem äußeren Ende zwischen dem Bolzen (5; 5a; 65) und dem Rohr gehalten ist.

11. Zahnrad-Lagerung nach Anspruch 1, dadurch gekennzeichnet, daß die Achse zwischen den beiden Flanschen (80, 81; 90, 91) eines zweiseitigen Trägers zusammengedrückt ist.

12. Zahnrad-Lagerung nach Anspruch 11, dadurch gekennzeichnet, daß die Achse an dem einen Flansch (80) über zusammenpassende, kegelförmige Flächen (84) anliegt, wobei Senkrechte zu diesen Flächen im wesentlichen durch den Massenschwerpunkt (C) der Achse verlaufen, und daß das andere Ende der Achse verschiebbar (bei 85) an dem anderen Flansch (81) anliegt.

13. Zahnrad-Lagerung nach Anspruch 11, dadurch gekennzeichnet, daß die Achse innere und äußere Teile (92, 93) mit radialem Spiel zwischen sich aufweist, wobei das äußere Teil (93) ein geschlossenes Ende (97), das verschiebbar an dem einen Flansch (91) anliegt, und ein offenes, von dem anderen Flansch (90) freies Ende aufweist, und das innere Teil (92) an dem anderen Flansch (90) und an der Innenfläche des geschlossenen Endes (97) anliegt, und wobei jede dieser Anlagen zwei im allgemeinen kegelförmige Flächen (95, 96) mit unterschiedlichen Krümmungen im Axialschnitt aufweist und Senkrechte zu diesen Flächen sich im wesentlichen durch den Massenschwerpunkt der Achse erstrecken.

14. Zahnrad-Lagerung nach Anspruch 13, dadurch gekennzeichnet, daß das innere Teil (92) ein Rohr ist, das sich unter Last gegensinnig durchbiegen kann.

15. Planeten-Getriebe, dadurch kekennzeichnet, daß die Planetenräder von Lagerrungen gemäß einem oder mehreren der vorhergehenden Ansprüche getragen sind.

Fig. 1

Fig. 2.

Fig. 3

FIG.4.

FIG.5.

Fig.6.

Fig.7.

Fig.8.